# EUROPEAN PATENT SPECIFICATION

(11) **EP 2 820 940 B1**
(45) Date of publication and mention of the grant of the patent: **22.01.2020**
(21) Application number: 14173406.1
(22) Date of filing: 23.06.2014
(51) Int. Cl.: A01G 17/02

(54) **Pneumatic leaf remover**
Entlaubungsvorrichtung
Dispositif d'éffeuillage

(30) Priority: 03.07.2013 IT TO20130556
(43) Date of publication of application: 07.01.2015
(73) Proprietor: OLMI srl, 14055 Castigliole d'Asti (AT) (IT)
(72) Inventor: Olmi, Franco, 14055 Castigliole d'Asti (AT) (IT)
(74) Representative: Vitillo, Giuseppe

(56) References cited:
- WO-A1-01/00008
- FR-A1- 2 289 112
- FR-A1- 2 543 792
- FR-A1- 2 712 461
- US-A- 4 175 368

## Description

The present invention relates to a leaf remover, which is adapted to be applied to leaf remover machines, in particular pneumatic leaf remover machines.

Such devices are known from e.g. WO 01/00008 A1. The subject-matter of the present invention preferably lies in the field of agricultural machines, in particular leaf remover machines for vineyards.

Vines knowingly require leaf removing in the fruit area, preferably close to the grape, both during blossoming, in order to obtain a mechanical thinning out effect onto the grapes, and after blossoming, even close to harvesting, in order to remove excess leaves in the fruit area of the vine, thus cleaning grapes from blossom residues and/or allowing them to be better exposed to sun light.

The international patent application no. WO 0100008A1 discloses a leaf remover head comprising a rotor, a pneumatic circuit comprising, in turn, a duct, and plurality of nozzles, through which an air flow is blown in a continuous manner so as to remove the leaves from the plant. Said head comprises a fixed or rotary deflector, which is able to deflect the air flowing out of said nozzles. The deflector is arranged at the front relative to the direction of the rotation axis of the rotor.

The air ducts directed at the different nozzles are arranged perpendicularly relative to the rotation axis of the rotor. The nozzles described in the aforesaid document can be adjusted in their position by means of a complex locking system, so as to be able to change the direction of the air jet. This solution requires a large space and the protection casing, which is suited to cover the pneumatic circuit and the rotor, has a great thickness. This means that the leaf remover machine on which said leaf remover head is fixed must have a support structure such as to take into into account the thickness of the protection casing relative to the direction of the rotation axis of the rotor and to its weight.

People skilled in the art know that, in order to increases the leaf removing power, especially when the head is fixed to leaf remover machine, the nozzles must be arranged so as not to direct the jet flowing out parallel to the rotation axis; as a matter of fact, the maximum leaf removing power is obtained when the jet is directed in a direction that diverges from said rotation axis. The configuration of divergent jets relative to said rotation axis allows the jets generated by heads arranged on the same leaf remover machine to cross one another.

The solution described in the above-mentioned international patent application comprises positioning the nozzles in this position, though requiring a proper fixing of the nozzle itself.

Furthermore, in a first solution described in that patent application, the deflector used for the air flow flowing out of the nozzles is made by means of grooves arranged along at least part of the perimeter of a circumference. Said grooves can allow foreign objects to enter the housing where the rotor and the pneumatic circuit are arranged. These foreign objects can cause the pneumatic circuit and/or the rotor to break.

Furthermore, said grooves are dangerous from the point of view of work safety, since the user could insert portions of the hand therein and be hit by the rotating pneumatic circuit, thus suffering serious injuries.

In a second embodiment, the deflector is a plate fixed, in an integral manner, to the rotor comprising a plurality of holes, in particular at least two holes for each nozzle. The presence of at least two holes for each nozzle is such as to allow the nozzle itself to be arranged in a proper manner and be properly fixed as a function of the direction in which the jet has to be directed. This means that, by means of different attempts, one can determine the correct position of the nozzle and fix it in this position. The drawback emerging from the head described in the aforesaid document lies in the fact that the nozzle can be locked in a desired position only if the plate is removed, so as to be able to inspect the housing defined by the protection casing, where the rotor and the pneumatic circuit are arranged. Hence, the solution described in that international patent application is particularly disadvantageous. Furthermore, the hole associated with the nozzle that, though, is not directly used, i.e. the hole from which no air jet will flow out, keeps being an access point for undesired objects, thus being a dangerous component from the point of view of user's safety.

Furthermore, the above-mentioned document does not provide any suggestion as to how to incline the nozzle also relative to another axis, in particular relative to the tangent of the circumference defined by the rotary motion of the nozzles around the rotation axis. Neither are there suggestions as to how to incline the nozzles in the embodiment comprising a rotary plate integral to the rotor.

The aforesaid document specifies, furthermore, that, in order to increase the working band of the assembly of leaf remover heads, one should position, inside the fixed protection casing, the single heads in particular configurations. In order to vary the working band, this solution requires, besides changing the position of the head inside the casing, also having a deflector configured in a proper manner. This solution involves a significant cost in terms of spare parts and, furthermore, the possible configurations among the heads, for the purpose of varying the working band, will consequently be a discrete and relative small number, for example two or three.

The object of the present invention is to solve the above mentioned technical problems by providing a leaf remover head with the features set forth in appended claim 1.

Further accessory features are set forth in the appended dependent claims.

The features and advantages of the leaf remover head according to the present invention will be best understood upon perusal of the following detailed description of an explanatory embodiment with reference to the accompanying drawings, which respectively show what follows:

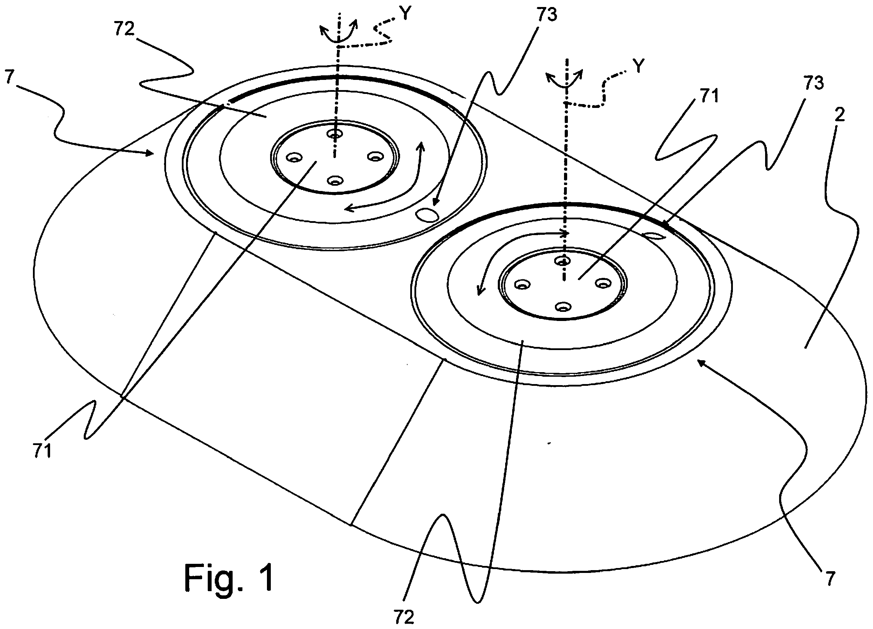

- figure 1 shows a whole leaf remover head according to the present invention in a perspective whole view of a first embodiment;

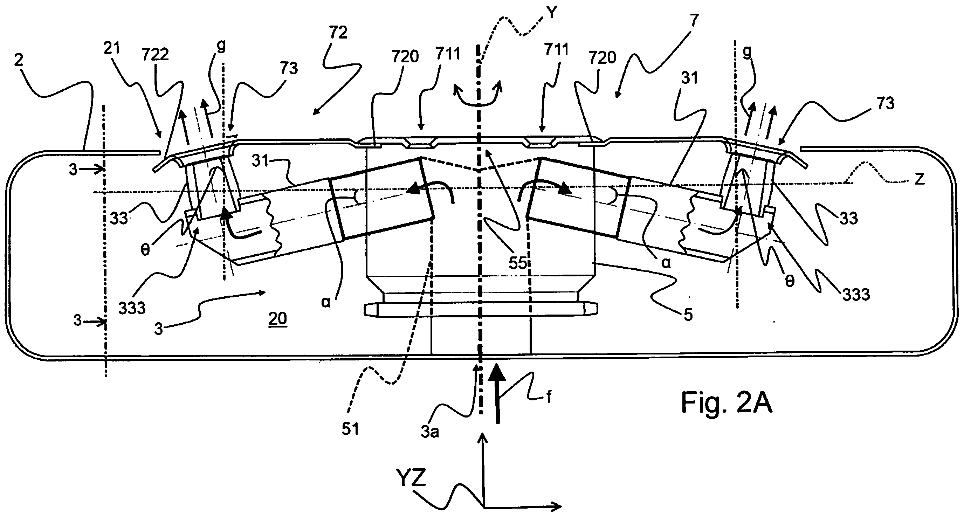

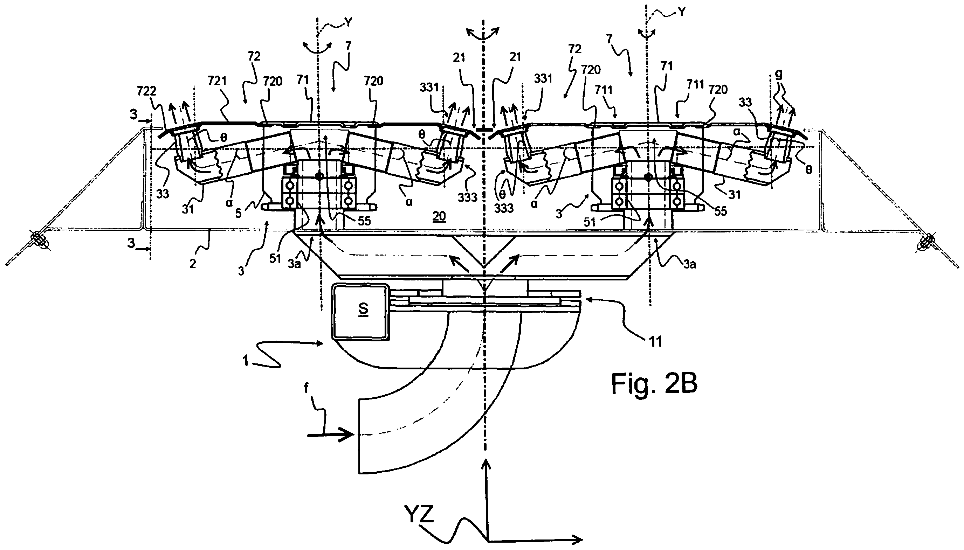

- figures 2A and 2B show, in lateral view, the leaf remover head according to the present invention in different embodiments; in particular, figure 2A shows a first embodiment, in a section view according to plane 2a-2a, in which inside the fixed protection casing there is arranged a single leaf remover head, figure 2B shows a second embodiment, in a section view, in which inside the fixed protection casing there are arranged two leaf remover heads, with the fixing of the pneumatic circuit to the rotor clearly visible;

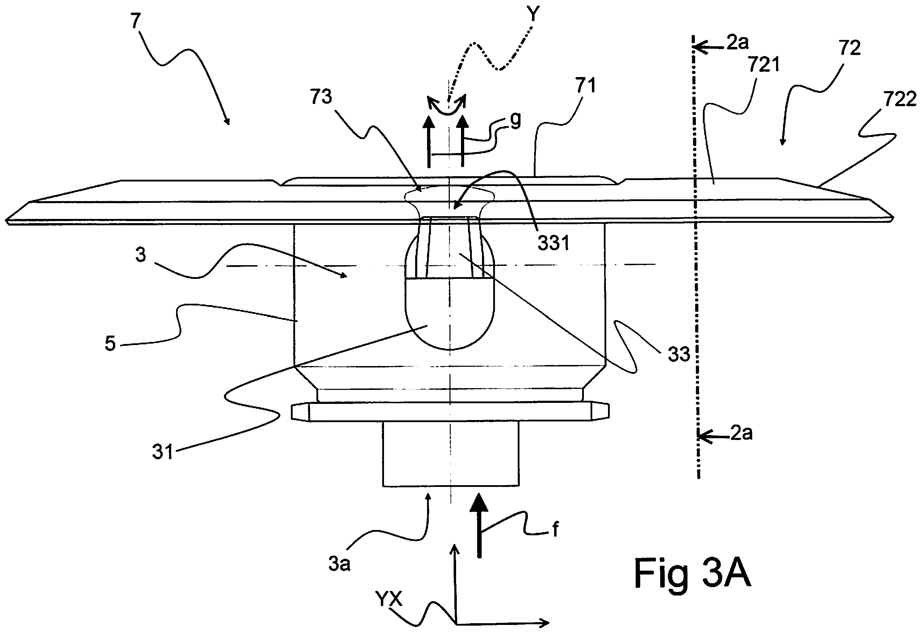

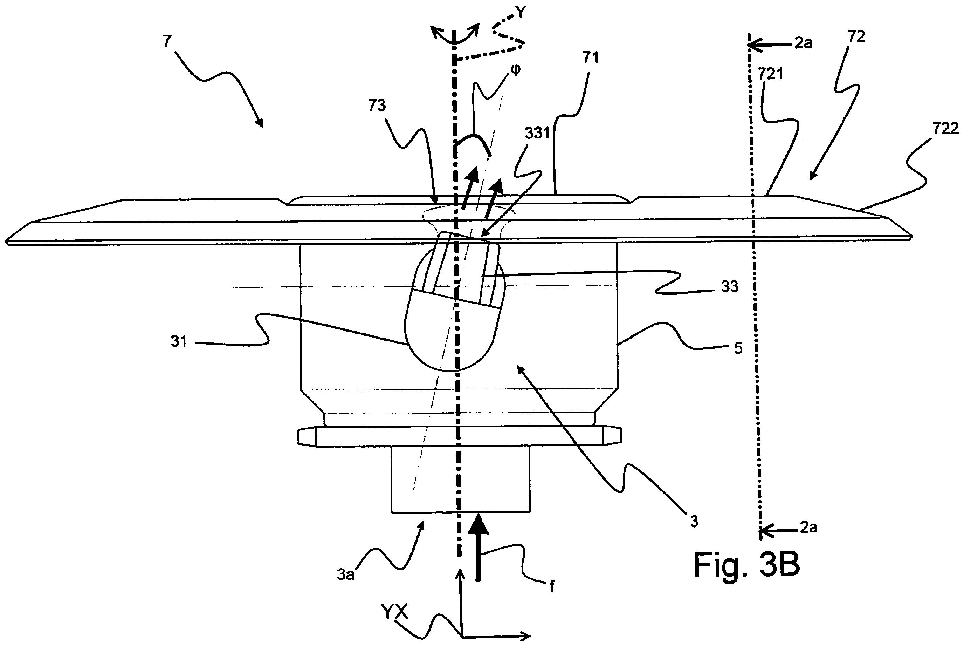

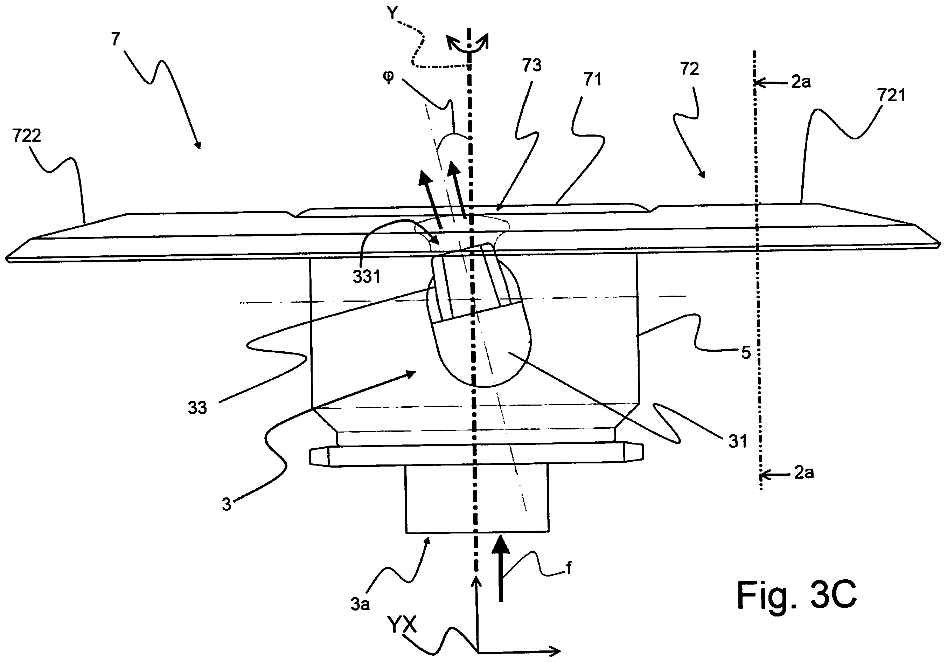

- figures 3A, 3B and 3C show the head in a lateral view according to plane 3-3, in which the nozzle is represented in different configurations; in particular, in figure 3A the outflow direction of the air flow of the nozzle is substantially along the direction of the rotation axis, in figure 3B the outflow direction of the air flow of the nozzle is inclined relative to the direction of the rotation axis, in figure 3C the outflow direction of the air flow of the nozzle is inclined relative to the direction of the rotation axis, substantially in a mirror-like manner compared to figure 3B;

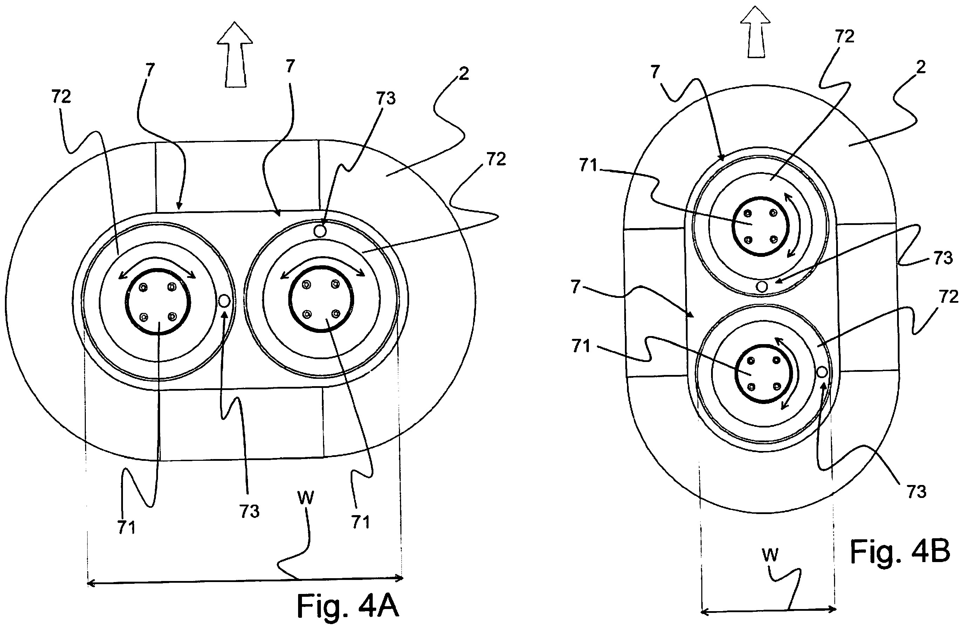

- figures 4A and 4B show, in a plan view from above, two different arrangements of a possible configuration of the heads enclosed in a protection casing relative to the forward direction of the leaf remover head; in particular, figure 4A shows a configuration in which the working band is the largest, figure 4B shown a configuration in which the working band is the smallest;

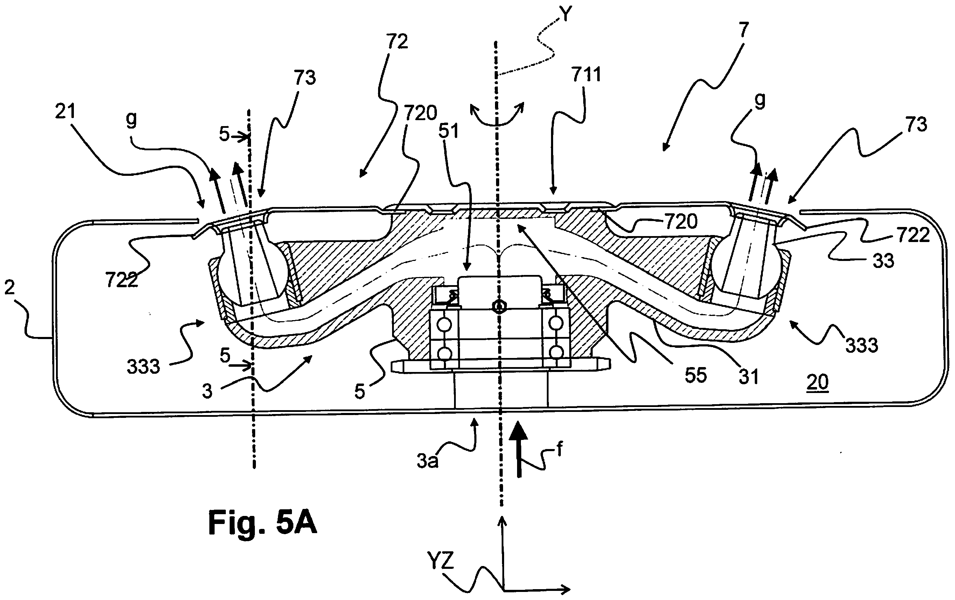

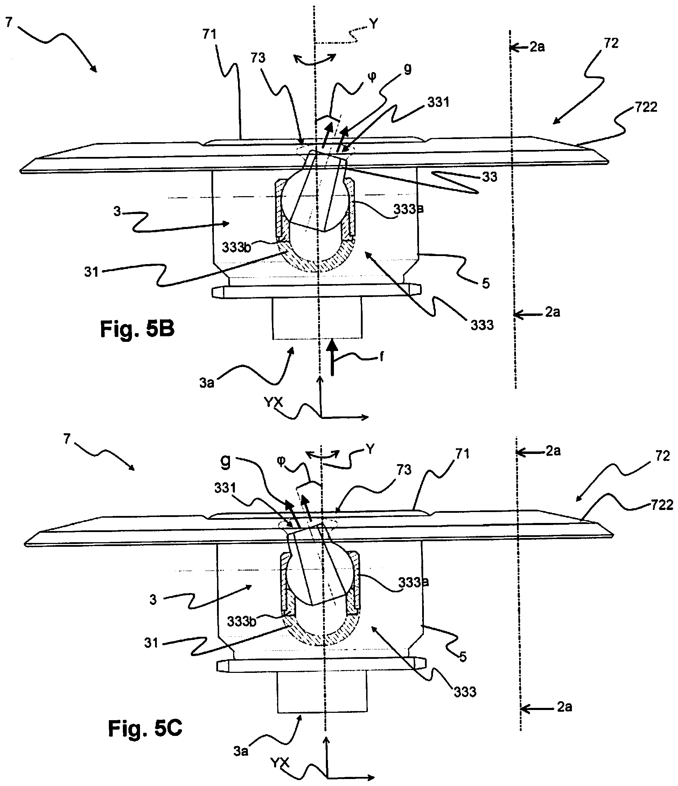

- figures 5A, 5B and 5C show a third embodiment of the leaf remover head according to the present invention; in particular, figure 5A shows a section view according to the plane 2a-2a, in which inside the fixed protection casing there is arranged one single leaf remover head with spherical nozzles, in figure 5B the outflow direction of the air flow of the spherical nozzle is inclined relative to the direction of the rotation axis; in figure 5C the outflow direction of the air flow of the spherical nozzle is inclined relative to the direction of the rotation axis, substantially in a mirror-like manner compared to figure 5B.

With reference to the figures mentioned above, the pneumatic leaf remover head according to the present invention comprises a pneumatic circuit 3, which comprises, in turn, at least one duct 31 and at least one nozzle 33.

Pneumatic circuit 3 is adapted to lead a compressed air flow "f", which enters from an inlet 3a of pneumatic circuit 3 itself, through said at least one duct 31 and towards said at least one nozzle 33. The compressed air flows out of each nozzle in the form of air jet "g". Said air jet performs a leaf removing function by acting upon plants, in particular vines.

Preferably, each nozzle 33 is arranged at one one of a corresponding duct 31. In alternative embodiments, which are not shown in the figures, one or more nozzles 33 can be connected along each duct 31, so as to create an array of nozzles.

Said pneumatic circuit 3 is connected to a pneumatic system, which is not shown in detail and is adapted to produce compressed air in a continuous manner.

Said pneumatic system is, for example, a compressor.

Preferably, pneumatic circuit 3 is adapted to lead air flow "f" towards different nozzles 33 in a continuous manner, so that each nozzle 33 lets out an air jet "g" in a continuous manner.

The head according to the present invention comprises, furthermore, a rotor 5, adapted to rotate around a rotation axis "Y". Pneumatic circuit 3 is fixed in an integral manner to said rotor 5, so that said pneumatic circuit 3 rotates with said rotor 5 in an integral manner.

Figure 2B shows, in a section view, an explanatory and non-limiting embodiment of pneumatic circuit 3 and of rotor 5. Figure 2B shows a passage 51, which houses part of pneumatic circuit 3 and ends in one or more ducts 31. In an alternative embodiment, passage 51 is a conduit which is itself part of pneumatic circuit 3.

Said rotor 5 comprises, furthermore, a motion transmission mechanism, which is not shown, adapted to transmit the motion from a pneumatic or electric or hydraulic actuator, such as for example a motor, to the rotor itself. The motion transmitted substantially is a rotary motion, so as to permit the rotation of rotor 5 itself and of the elements associated with it.

Said rotor 5 will not be described in detail, since it is known to a person skilled in the art.

The head according to the present invention comprises at least one protection plate 7, which comprises, in turn, at least one deflector, adapted to allow air jet "g" to properly flow out of nozzles 33, towards the outside, so as to perform the leaf removing function.

Said protection plate 7 is arranged in front of said at least one nozzle 33 relative to the direction of rotation axis "Y" or to the direction of air jet "g", so that air jet "g" flowing out of said at least one nozzle 33 can at least partially flow through said at least one deflector.

In the preferred embodiment of the head, said protection plate 7 is fixed to said rotor 5 in an integral manner, so as to rotate together with it.

In the preferred embodiment of the leaf remover, said at least one deflector is at least one hole 73. Each hole 73 is substantially arranged in correspondence to said at least one nozzle 33.

The head according to the present invention comprises a protection casing 2.

Figure 1 shows an explanatory embodiment of the head completely assembled, in which one can see protection casing 2, protection plate 7 and at least one hole 73 comprised in said plate.

Said protection casing 2 comprises a housing 20, in which rotor 5 and pneumatic circuit 3 are arranged Protection casing 2 comprises, furthermore, an opening 21, which defines the inlet of said housing 20.

Said protection casing comprises, furthermore, a through hole, which is not shown in detail, arranged in a mirror-like manner relative to said opening; said through hole permits the passage of a portion of an air duct, which is connected to the pneumatic system and is adapted to be connected to said pneumatic circuit 3 so as to convey compressed air. The supply of an actuator and/or the motion transmission means for the rotation of rotor 5 reach the casing through said hole. This portion of the head will not be described any further, because it is known to a skilled person.

Said protection plate 7 prevents foreign bodies from entering said housing 20 from the outside.

Preferably, said protection plate 7 comprises at least one inclined portion, which will be discussed in detail below. Said at least one hole 73 is provided in correspondence to said inclined portion.

Moving on to the manufacturing details of the leaf remover head according to the present invention, said at least one duct 31, in at least one portion or segment thereof, is inclined, for example at a first angle "α", relative to a first reference axis "Z". Said first reference axis "Z" is perpendicular to said rotation axis "Y".

Said first angle "α" preferably ranges from 5° to 45°, for example is equal to 35°.

The inclination of said at least one portion or segment of duct 31 establishes an inclination of corresponding nozzle 33, for example at a second angle "θ", relative to rotation "Y", relative to a first reference plane "YZ".

Said second angle "θ" preferably ranges from 5° to 45°, for example is equal to 15°.

For the purpose of the present invention, the term "first reference plane" means a plane in which one can see the maximum longitudinal extension of at least one duct 31 of the pneumatic circuit, as shown for example in figures 2A, 2B and 5A. Said first reference plane "YZ" is plane that is coincident with or parallel to the section plane 2a-2a. Said section plane 2a-2a is shown in figures 3A-3C and 5B-5C.

Preferably, the inclination of said at least one segment of duct 31 is such that the end portion of said segment, relative to the direction of air flow "f", is at a lower height compared to the initial portion of the same inclined segment of duct 31, as shown for example in figures 2A-2B and 5A.

Preferably, said at least one inclined portion or segment of duct 31 is preferably straight.

In alternative embodiments, shown for example in figure 5A, in order to obtain the inclination, said at least one portion or segment of duct 31 has a non-linear development, for example a curved one.

The inclination of duct 31 allows the overall space taken up by pneumatic circuit 3 to be reduced.

The reduction of the space taken up by the assembly made up of pneumatic circuit 3 and rotor 5 leads to a reduction of the dimensions of the leaf remover. In this case, it permits a reduction of the thickness, relative to rotation axis "Y", of the head. The reduction of the dimensions of the head - and in particular of its thickness - permits a reduction of the dimensions of the protection casing. The reduction of the dimensions of the protection casing reduces the overall weight of the leaf remover head as well as manufacturing costs, since manufacturers need to use a smaller amount of metal material, such as steel. Furthermore, the reduction of the overall weight of the leaf remover head facilitates the assembly and, in particular, the fixing of the head to a leaf remover machine.

In general, as mentioned above, the inclination of at least one portion or segment of duct 31, for example at a third angle "ϕ", furthermore, allows corresponding nozzle 33 to be provided with an inclination, for example at a second angle "θ", relative to rotation axis "Y", so as to increase the leaf removing power of the leaf remover head. The inclination of nozzle 33, indeed, permits the creation of a jet "g", which is not parallel to rotation axis "Y" relative to the first reference plane "YZ". This inclination of nozzle 33, for example at a second angle "θ", allows air jets "g" generated by one leaf remover head to interact with other air jets "g" generated by other leaf remover heads, for example arranged close to it. This is shown, for example, in figure 2B.

Each nozzle 33 is fixed to a respective duct 31 in an adjustable manner.

Each nozzle 33 comprises a connection portion 333, which is adapted to engage with said duct 31, so as to vary the direction of air jet "g" flowing out of an outlet 331 included in nozzle 33 itself.

In the embodiment shown in figures 1A-3C, connection portion 333 allows nozzle 33 to be arranged in the desired position, so as to obtain the desired direction of air jet "g", and, by means of a locking mechanism, which is not shown, nozzle 33 is locked in this position in a releasable manner. Said locking means are of the type comprising bolts, as a skilled person knows.

In the alternative embodiment of figures 5A-5C, nozzle 33 comprises a spherical portion, which is adapted to move inside a recess 333a. Spherical nozzle 33 is kept in its position by a striker base 333b, which is screwed onto a threaded portion provided in said recess 333a, so as to adjust the position of the nozzle and, in use, prevent it from moving any further.

In general, connection portion 333 allows the position of nozzle 33 to be varied both by varying the inclination relative to axis "Y" relative to the first reference plane "YZ", for example at a second angle "θ", as we already know, and by varying its position relative to rotation axis "Y", for example at a third angle "ϕ", relative to a second reference plane "YX".

Said third angle "ϕ" preferably ranges from 5° to 15°, for example is equal to 10°.

For the purpose of the present invention, the term "second reference plane YX" means a plane that is perpendicular to the first reference plane "YZ" and in which one can see frontally, relative to the direction of the air flow, both the duct and the nozzle. Said second reference plane is coincident with or parallel to section plane 3-3, shown for example in figures 2A and 2B.

The adjustment of the position of nozzle 33 in the second reference plane "YX", in the different configurations, for example at a third angle "ϕ", is shown, for example, in figures 3A-3C and in figures 5B and 5C.

In the preferred embodiment, said connection portion 333 is the same end portion of duct 31. In this embodiment, a rotation of the terminal portion of the duct around its own longitudinal axis permits a variation of the inclination of nozzle 333 associated with duct 31, for example at third angle "ϕ", relative to rotation axis "Y". This embodiment can easily be manufactured, thus permitting an easy realization of the inclination, for example at a third angle "ϕ", relative to rotation axis "Y", compared to the prior art.

Describing now in detail the single configurations of nozzle 33 in different positions, figure 3A shows an adjustment of nozzle 33, in which the direction of air jet "g" is substantially irrelevant relative to the rotation direction of nozzle 33 itself around rotation axis "Y". Figures 3B and 3C show two configurations of the nozzle that are substantially opposite to one another. In these configurations, the direction of air jet "g" flowing out of the nozzle can be concordant or discordant with the rotation direction of the nozzle itself. In particular, in the two configurations shown in figures 3B and 3C, the head would be able to rotate only thanks to the thrust action received from air jet "g", which generates a twisting moment on the leaf remover head itself.

Furthermore, the configurations described described in figures 3B and 3C significantly increase the leaf removing power of the head according to the present invention compared to the leaf remover heads of the prior art, which can only change the position relative to rotation axis "Y" relative to the first reference plane "YZ".

Figures 5B and 5C show two configurations of the nozzle that are substantially opposite to one another, in a view relative to plane 5-5 shown in figure 5A. The configurations shown are substantially similar to the ones described in figures 3B and 3C, but the type of nozzle used has been changed.

In order to permit the variation of the position of the nozzles described above, protection plate 7, included in the leaf remover head according to the present invention, has the following features. Protection plate 7 comprises: a central portion 71, relative to rotation axis "Y", which is fixed to rotor 5 in an integral manner, and a peripheral portion 72, relative to rotation axis "Y", which is fixed to said central portion 71 and adapted to rotate around rotation axis "Y" independently of said central portion, thus varying its position relative to said central portion 71.

Said at least one hole 73, through which the air jet "g" flowing out of nozzle 33 can flow to the outside, so as to perform the leaf removing function, is provided in correspondence to said peripheral portion 72.

The possibility to cause peripheral portion 72 to rotate independently of central portion 71 allows holes 73 to be correctly positioned as a function of the variation of the configuration of nozzle 33. Indeed, as a function of one of the possible configuration that can be assumed by nozzle 33, for example the ones shown in figures 3A-3C and 5B-5C, the hole 73 must be correctly positioned in such a way that the direction of the air jet "g" flowing out of nozzle 33 substantially extends through the center of hole 73 itself. The leaf remover head according to the present invention permits an adjustment of the position of holes 73 even after the fixing, at least partial, of protection plate 7 to rotor 5.

In general, during the operation of the leaf remover head, protection plate 7 rotates with nozzles 33 in an integral manner.

In the preferred embodiment of protection plate 7, central portion 71 has a disc-like shape comprising a plurality of connection holes 711. Thanks to fixing means extending through said connection holes 711, such as for example screws, protection plate 7 is fixed to a connection portion 55 included in rotor 5. Said connection portion 55 is arranged in the upper part of rotor 5, as shown in the appended figures.

In the preferred embodiment of protection plate 7, said peripheral portion 72 is a circular crown with an inner diameter that is smaller than the outer diameter of central portion 71, so that said peripheral portion 72 can both be coupled to said central portion 71 and permit a relative rotation between peripheral portion 72 and central portion 71.

In the preferred embodiment, said peripheral portion 72 is locked, in a portion of its close to central portion 71, between central portion 71 itself and connection portion 55 of rotor 5. The final locking of peripheral portion 72 takes place after the positioning of hole 73 close to the nozzle 33. In particular, hole 73 must be correctly positioned as a function of the positioning configuration assumed by nozzle 33.

Peripheral portion 72 comprises a flange portion 720, which is close to the smaller circumference of the circular crown. By means of said portion flange 720, peripheral portion 72 is locked between central portion 71 and connection portion 55 of rotor 5.

Preferably, in order to the assemble protection plate 7 to the leaf remover head - and in particular to rotor 5 - peripheral portion 72 is positioned first. After the positioning of peripheral portion 72, central portion 71 is positioned, so that flange portion 720 of the peripheral portion is interposed between central portion 71 itself and connection portion 55 of rotor 5. Afterwards, central portion 71 is temporarily fixed to rotor 5 by means of fixing means. The temporary fixing of central portion 71 allows peripheral portion 72 to be locked, in the sense that the peripheral portion cannot be removed any longer, but peripheral portion 72 is still allowed to rotate, relative to central portion 71, around rotation axis "Y". Thanks to this degree of freedom granted to peripheral portion 72, hole 73 can be properly positioned close to nozzle 33, as a function of the chosen configuration of nozzle 33. Finally, after hole 73 has been correctly positioned relative to nozzle 33, central portion 71 is locked, so as to lock, between central portion 71 and connection portion 55, flange portion 720, thus preventing peripheral portion 72 from rotating. Whenever the configuration of the nozzles has to be changed, it is possible to solely move peripheral portion 72, so as to allow the air jet "g" to flow out.

Peripheral portion 72, which rotates relative to central portion 71, ensures the presence of one single hole 73 for any desired configuration of nozzle 33. The prior art, on the contrary, required, for each nozzle, a number of holes equal to the number of possible configuration that could be assumed by the single nozzle.

Describing now the manufacturing details of the leaf remover head, said peripheral portion 72 comprises: a flat portion 721, and an inclined portion 722. Preferably, said inclined portion 722 is inclined towards the inside of housing 20 of protection casing 2. In particular, said inclined portion 722 is inclined towards nozzles 33.

More preferably, said flat portion 721 is close to the circumference with the smaller diameter, whereas said inclined portion 722 is close to the circumference with the larger diameter of the circular crown.

Preferably, said at least one hole 73 is provided in correspondence to said inclined portion 722.

In general, said hole 73 is a bevelled hole, whose edges face corresponding nozzle 33. The shape of the hole 73, for example as shown in the appended figures, reduces work injury risks during the use of the leaf remover machine.

Preferably, in order to reduce possible work injuries, central portion 71 is substantially flat, thus creating a continuous surface, which is flat as well, with flat portion 721 of peripheral portion 72. This aspect is clearly visible in figure 1.

Since the surface of the head is substantially flat, the build-up of residues is avoided, which might penetrate housing 20 of protection casing 2.

As mentioned above, the leaf remover head according to the present invention is adapted to be installed on a leaf remover machine adapted to remove leaves from plants. As a skilled person knows, a leaf remover machine comprises a support structure "S" and at least one pneumatic leaf remover head, which is fixed to said support structure.

For the fixing of said at least one leaf remover head to the leaf remover machine, the head comprises a fixing portion 1, which is adapted to allow the head to be fixed to said support structure "S".

As shown in figure 2B, in an embodiment in which more than one leaf remover head is provided inside the protection casing, a single fixing portion 1 is provided, which comprises a rotation fifth wheel 11, which is able to vary a working band "W" on which said leaf remover heads operate, thus causing the leaf remover heads to rotate in an integral manner around an axis that is parallel to rotation axis "Y" of each single leaf remover head.

As shown in figures 4A and 4B, as a function of the forward direction of the machine, working band "W" can be changed based on the single needs.

For the purpose of the present invention, the term "working band" means the transverse extension, relative to the forward direction, occupied by the assembly of the leaf remover heads.

During the preparation of the leaf remover heads, the position of the leaf remover heads and, in particular, the position of fixed casing 2 can be adjusted so as to obtain the desired extension of working band "W".

In particular, by moving the structure by means of rotation fifth wheel 11, one can obtain the desired extension of working band "W". After having obtained the desired extension, said rotation fifth wheel 11 is properly locked by means of fixing means, so as to prevent the rotation fifth wheel itself from rotating any further.

The present solution permits countless possible configurations with different dimensions for working band "W".

Said machine comprises, furthermore, a pneumatic system, which is adapted to generate compressed air flows for the leaf remover heads, and a plurality of actuators, which are able to move said rotors for the rotation of the leaf remover heads. In a preferred embodiment, said machine comprises a control unit, which is able to adjust both the compressed air flows directed at the single leaf remover heads and the rotation speed of each one of said heads.

Furthermore, the leaf remover head according to the present invention ensures a continuous flow of compressed air, which will generate continuous air flows flowing out of nozzles 33.

The leaf remover head according to the present invention has an air impulse frequency that is a function of the rotation speed of the leaf remover head, in particular proportional to the rotation speed.

The head according to the present invention, as one can assume from figure 1, does not have openings through which foreign objects can enter housing 21. Furthermore, there are no openings or sharp surfaces that during the use of the head might cause injuries to the user.

**NUMERICAL REFERENCES:**

| | |
|---|---|
| Fixing structure | 1 |
| Rotation fifth wheel | 11 |
| Protection casing | 2 |
| Housing | 20 |
| Opening | 21 |
| Pneumatic circuit | 3 |
| Inlet | 3a |
| Duct | 31 |
| Nozzle | 33 |
| Outlet | 331 |
| Connection portion | 333 |
| Recess | 333a |
| Striker base | 333b |
| Rotor | 5 |
| Passage | 51 |
| Connection portion | 55 |
| Protection plate | 7 |
| Central portion | 71 |
| Connection holes | 711 |
| Peripheral portion | 72 |
| Flange portion | 720 |
| Flat portion | 721 |
| Inclined portion | 722 |
| Hole | 73 |
| Air flow | "f" |
| Air jet | "g" |
| Rotation axis | "Y" |
| First reference axis | "Z" |
| First reference plane | "YX" |
| Second reference plane | "YZ" |
| First angle | "α" |
| Second angle | "θ" |
| Third angle | "ϕ" |
| Working band | "W" |
| Support structure | "S" |

## Claims

1. Pneumatic leaf remover head comprising:
• a pneumatic circuit (3) comprising at least one duct (31) and at least one nozzle (33); said pneumatic circuit (3) is adapted to lead an air flow (f), through said at least one duct (31), towards said at least one nozzle (33), so as to cause an air jet (g) to flow out;
• a rotor (5), for rotating around a rotation axis (Y) and to which said pneumatic circuit (3) is fixed in an integral manner, so that said pneumatic circuit (3) rotates with said rotor (5) in an integral manner;
• at least one protection plate (7) comprising at least one deflector, which is arranged in front of said at least one nozzle (33) relative to the direction of the rotation axis (Y), so that the air jet (g) flowing out of said at least one nozzle (33) can at least partially flow through said at least one deflector;
said protection plate (7) is fixed to said rotor (5) in an integral manner, so as to rotate with it;
said at least one deflector is at least one hole (73), each one arranged close to said at least one nozzle (33); wherein said protection plate (7) comprises:
• a central portion (71), relative to the rotation axis (Y), which is fixed to the rotor (5) in an integral manner, and
• a peripheral portion (72), relative to the rotation axis (Y), which is fixed to said central portion (71) for rotating around the axis (Y) in an independent manner, thus varying its position relative to said central portion (71);
said at least one hole (73) being provided in correspondence to said peripheral portion (72).

2. Leaf remover head according to claim 1, wherein at least one portion of said at least one duct (31) is inclined relative to a first reference axis (Z), which is perpendicular to said rotation axis (Y), thus creating an inclination of the corresponding nozzle (33) relative to the rotation axis (Y) in a first reference plane (YZ).

3. Leaf remover head according to claim 2, wherein said nozzle (33) is fixed at the end of a respective duct (31) in an adjustable manner, so as to allow the direction of the air jet (g) flowing out of the nozzle (33) to be varied by varying its position relative to the rotation axis (Y) in a second reference plane (YX).

4. Leaf remover head according to claim 1, wherein said peripheral portion (72) comprises:
• a flat portion (721), and;
• an inclined portion (722);
said at least one hole (73) being provided in correspondence to said inclined portion (722).

5. Leaf remover head according to claim 4, wherein the central portion (71) is substantially flat, thus creating a continuous surface, which is flat as well, with the flat portion (721) of the peripheral portion (72).

6. Leaf remover head according to one of the previous claims, wherein said hole (73) is a bevelled hole, which edges face the corresponding nozzle (33).

7. Leaf remover head according to claim 1, wherein the protection plate (7) comprises at least one inclined portion;
said at least one hole (73) being provided in correspondence to said inclined portion.

8. Leaf remover head according to any of the previous claims, wherein said leaf remover head comprises a protection casing (2) comprising:
• a housing (20), in which the rotor (5) and the pneumatic circuit (3) are arranged;
• an opening (21), which defines the inlet of said housing (20);
said protection plate (7) preventing foreign bodies from entering said housing (20) from the outside.

9. Leaf remover machine for defoliate plants and comprising a support structure (S) and at least one pneumatic leaf remover head, which is fixed to said support structure, said leaf remover machine being **characterized in that** said at least one leaf remover head is a leaf remover head according to claim 1.

10. Machine according to claim 9, wherein:
- more than one leaf remover head is provided;
- a single fixing portion (1) is provided, which comprises a rotation fifth wheel (11), which is able to vary a working band (W) on which said leaf remover heads operate;
said fifth wheel (11) causes the leaf remover heads to rotate in an integral manner around an axis that is parallel to the rotation axis (Y) of each single leaf remover head.

## Patentansprüche

1. Pneumatischer Entlaubungskopf, Folgendes umfassend:
• einen pneumatischen Kreislauf (3), umfassend wenigstens einen Kanal (31) und wenigstens eine Düse (33); wobei der pneumatische Kreislauf (3) angepasst ist, einen Luftstrom (f) durch den wenigstens einen Kanal (31) zu der wenigstens einen Düse (33) hin zu führen, um zu bewirken, dass ein Luftstrahl (g) hinausströmt;
• einen Rotor (5), zum Drehen um eine Drehachse (Y) und an den der pneumatische Kreislauf (3) einstückig befestigt ist, sodass sich der pneumatische Kreislauf (3) einstückig mit dem Rotor (5) dreht;
• wenigstens eine Schutzplatte (7), umfassend wenigstens einen Deflektor, der vor der wenigstens einen Düse (33) bezogen auf die Richtung der Drehachse (Y) angeordnet ist, sodass der Luftstrahl (g), der aus der wenigstens einen Düse (33) hinausströmt, wenigstens teilweise durch den wenigstens einen Deflektor strömen kann;
wobei die Schutzplatte (7) einstückig an dem Rotor (5) befestigt ist, um sich mit diesem zu drehen;
wobei wenigstens ein Deflektor wenigstens ein Loch (73) ist, wobei jedes nahe bei der wenigstens einen Düse (33) angeordnet ist;
wobei die Schutzplatte (7) Folgendes umfasst:
• einen Mittelteil (71), bezogen auf die Drehachse (Y), der einstückig an dem Rotor (5) befestigt ist, und
• einen Umfangsteil (72), bezogen auf die Drehachse (Y), der an dem Mittelteil (71) befestigt ist, zum unabhängigen Drehen um die Achse (Y), wodurch sich seine Position bezogen auf den Mittelteil (71) ändert;
wobei das wenigstens eine Loch (73) dem Umfangsteil (72) entsprechend bereitgestellt ist.

2. Entlaubungskopf nach Anspruch 1, wobei wenigstens ein Teil des wenigstens einen Kanals (31) bezogen auf eine erste Bezugsachse (Z), die senkrecht zu der Drehachse (Y) ist, geneigt ist, wodurch in einer ersten Bezugsebene (YZ) eine Neigung der entsprechenden Düse (33) bezogen auf die Drehachse (Y) erzeugt wird.

3. Entlaubungskopf nach Anspruch 2, wobei die Düse (33) einstellbar am Ende eines entsprechenden Kanals (31) befestigt ist, um zu erlauben, dass sich die Richtung des aus der Düse (33) strömenden Luftstrahls (g) ändert, indem seine Position bezogen auf die Drehachse (Y) in einer zweiten Bezugsebene (YX) verändert wird.

4. Entlaubungskopf nach Anspruch 1, wobei der Umfangsteil (72) Folgendes umfasst:
• einen flachen Teil (721) und
• einen geneigten Teil (722);
wobei das wenigstens eine Loch (73) dem geneigten Teil (722) entsprechend bereitgestellt ist.

5. Entlaubungskopf nach Anspruch 4, wobei der Mittelteil (71) im Wesentlichen flach ist, wodurch mit dem flachen Teil (721) des Umfangsteils (72) eine durchgehende Oberfläche erzeugt wird, die ebenfalls flach ist.

6. Entlaubungskopf nach einem der vorhergehenden Ansprüche, wobei das Loch (73) ein abgeschrägtes Loch ist, dessen Kanten der entsprechenden Düse (33) zugewandt sind.

7. Entlaubungskopf nach Anspruch 1, wobei die Schutzplatte (7) wenigstens einen geneigten Teil umfasst;
wobei das wenigstens eine Loch (73) dem geneigten Teil entsprechend bereitgestellt ist.

8. Entlaubungskopf nach einem der vorhergehenden Ansprüche, wobei der Entlaubungskopf ein Schutzgehäuse (2) umfasst, Folgendes umfassend:
• ein Gehäuse (20), in dem der Rotor (5) und der pneumatische Kreislauf (3) angeordnet sind;
• eine Öffnung (21), das den Einlass des Gehäuses (20) definiert;
wobei die Schutzplatte (7) verhindert, dass Fremdkörper von außen in das Gehäuse (20) eintreten können.

9. Entlaubungsmaschine, zum Entlauben von Pflanzen und umfassend eine Tragestruktur (S) und wenigstens einen pneumatischen Entlaubungskopf, der auf der Tragestruktur befestigt ist, wobei die Entlaubungsmaschine **dadurch gekennzeichnet ist, dass** der wenigstens eine Entlaubungskopf ein Entlaubungskopf nach Anspruch 1 ist.

10. Maschine nach Anspruch 9, wobei:
- mehr als ein Entlaubungskopf bereitgestellt ist;
- ein einzelner Befestigungsteil (1) bereitgestellt ist, der eine Drehsattelkupplung (11) umfasst, die in der Lage ist, ein Arbeitsband (W), auf dem die Entlaubungsköpfe betrieben werden, zu verändern;
die Drehsattelkupplung (11) bewirkt, dass sich die Entlaubungsköpfe einstückig um eine Achse drehen, die parallel zur Drehachse (Y) jedes einzelnen Entlaubungskopfes ist.

## Revendications

1. Tête d'effeuillage pneumatique comprenant :
- un circuit pneumatique (3) comprenant au moins un conduit (31) et au moins une buse (33) ; ledit circuit pneumatique (3) est adapté pour mener un flux d'air (f) par ledit au moins un conduit (31) vers ladite au moins une buse (33) de sorte à amener un jet d'air (g) à s'écouler ;
- un rotor (5) pour tourner autour d'un axe de rotation (Y) et auquel ledit circuit pneumatique (3) est fixé de manière intégrale de sorte que ledit circuit pneumatique (3) tourne avec ledit rotor (5) de manière intégrale ;
- au moins une plaque de protection (7) comprenant au moins un déflecteur qui est agencé en face de ladite au moins une buse (33) par rapport à la direction de l'axe de rotation (Y) de sorte que le jet d'air (g) s'écoulant de ladite au moins une buse (33) puisse s'écouler au moins en partie par ledit au moins un déflecteur ;
ladite plaque de protection (7) est fixée sur ledit rotor (5) de manière intégrale de sorte à tourner avec lui ;
ledit au moins un déflecteur est au moins un trou (73), chacun agencé près de ladite au moins une buse (33) ;
dans lequel ladite plaque de protection (7) comprend :
- une partie centrale (71) par rapport à l'axe de rotation (Y), qui est fixée au rotor (5) de manière intégrale et
- une partie périphérique (72) par rapport à l'axe de rotation (Y) qui est fixée à ladite partie centrale (71) pour la rotation autour de l'axe (Y) de manière indépendante, variant ainsi sa position relative à ladite partie centrale (71) ;
ledit au moins un trou (73) étant prévu en correspondance de ladite partie périphérique (72).

2. Tête d'effeuillage selon la revendication 1, dans laquelle au moins une partie dudit au moins un conduit (31) est inclinée par rapport à un premier axe de référence (Z) qui est perpendiculaire audit axe de rotation (Y), créant ainsi une inclinaison de la buse correspondante (33) par rapport à l'axe de rotation (Y) dans un premier plan de référence (YZ).

3. Tête d'effeuillage selon la revendication 2, dans laquelle ladite buse (33) est fixée de manière ajustable sur l'extrémité d'un conduit respectif (31) de sorte à permettre à la direction du jet d'air (g) s'écoulant de la buse (33) d'être variée en variant sa position par rapport à l'axe de rotation (Y) dans un second plan de référence (YX).

4. Tête d'effeuillage selon la revendication 1, dans laquelle ladite partie périphérique (72) comprend :
- une partie plate (721) et ;
- une partie inclinée (722) ;
ledit au moins un trou (73) étant prévu en correspondance de ladite partie inclinée (722).

5. Tête d'effeuillage selon la revendication 4, dans laquelle la partie centrale (71) est sensiblement plate, créant ainsi une surface continue qui est aussi plate, avec la partie plate (721) de la partie périphérique (72).

6. Tête d'effeuillage selon l'une quelconque des revendications précédentes, dans laquelle ledit trou (73) est un trou biseauté, dont les arêtes font face à la buse correspondante (33).

7. Tête d'effeuillage selon la revendication 1, dans laquelle la plaque de protection (7) comprend au moins une partie inclinée ;
ledit au moins un trou (73) étant prévu en correspondance de ladite partie inclinée.

8. Tête d'effeuillage selon l'une quelconque des revendications précédentes, dans laquelle ladite tête d'effeuillage comprend une enveloppe de protection (2) comprenant :
- un boîtier (20), dans lequel le rotor (5) et le circuit pneumatique (3) sont agencés ;
- une ouverture (21) qui définit l'entrée dudit boîtier (20) ;
ladite plaque de protection (7) empêchant des corps étrangers d'entrer dans ledit boîtier (20) de l'extérieur.

9. Machine d'effeuillage pour défolier des plantes et comprenant une structure de support (S) et au moins une tête d'effeuillage pneumatique qui est fixée à ladite structure de support, ladite machine d'effeuillage étant **caractérisée en ce que** ladite au moins une tête d'effeuillage est une tête d'effeuillage selon la revendication 1.

10. Machine selon la revendication 9, dans laquelle :
- plus d'une tête d'effeuillage est prévue ;
- une seule partie de fixation (1) est prévue, laquelle comprend une cinquième roue de rotation (11) qui est capable de varier une bande de transport (W), sur laquelle lesdites têtes d'effeuillage fonctionnent ;
ladite cinquième roue (11) amène les têtes d'effeuillage à tourner de manière intégrale autour d'un axe qui est parallèle à l'axe de rotation (Y) de chaque seule tête d'effeuillage.
